# EUROPÄISCHE PATENTSCHRIFT

(11) **EP 1 441 929 B1**
(45) Veröffentlichungstag und Bekanntmachung des Hinweises auf die Patenterteilung: **30.03.2005**
(21) Anmeldenummer: 02783029.8
(22) Anmeldetag: 29.10.2002
(51) Int. Cl.: B60R 19/18

(54) **RAHMENFÖRMIGES, MIT EINER BANDFÖRMIGEN ABDECKUNG EINSEITIG VERSCHLOSSENES TRAGELEMENT EINES KRAFTFAHRZEUGES**
FRAME-SHAPED SUPPORTING ELEMENT FOR A MOTOR VEHICLE, WHICH CLOSED ON ONE SIDE BY WEB-SHAPED COVER
ELEMENT PORTEUR POUR VEHICULE AUTOMOBILE, EN FORME DE CADRE FERME SUR UN COTE PAR UN RECOUVREMENT EN FORME DE BANDE

(30) Priorität: 10.11.2001 DE 10155341
(43) Veröffentlichungstag der Anmeldung: 04.08.2004
(73) Patentinhaber: DaimlerChrysler AG, 70567 Stuttgart (DE)
(72) Erfinder: GLASHAGEL, Mario, 71292 Friolzheim (DE); KAUFFMANN, Volker, 71272 Renningen (DE); KREMPELS, Uwe, 71032 Böblingen (DE); NUBER, Walter, 73033 Göppingen (DE); SCHMID, Holger, 72160 Horb (DE)
(86) Internationale Anmeldenummer: PCT/EP2002/012051
(87) Internationale Veröffentlichungsnummer: WO 2003/042004

(56) Entgegenhaltungen:
- WO-A-99/20490
- DE-A- 10 056 865
- US-A- 4 116 480
- US-A- 5 462 325
- US-A- 6 126 214

## Beschreibung

Die Erfindung betrifft ein rahmenförmiges, mit einer bandförmigen Abdeckung einseitig fest verschlossenes Tragelement eines Kraftfahrzeuges nach dem Oberbegriff des Patentanspruchs.

Ein solches Tragelement ist aus der WO 99/20 490 A bekannt.

Die Erfindung beschäftigt sich mit dem Problem, in einem Crashfalle die bandförmige Abdeckung des rahmenförmigen Tragteils gegen eine plastische Verformung durch von dem Stoßfänger auf die Abdeckung ausgeübte Kräfte bei einer möglichst leichtgewichtigen Ausbildung der Abdeckung bis zu einem möglichst hohen oberen Grenzwert der Aufprallenergie zu vermeiden.

Gelöst wird dieses Problem durch die Ausbildung eines gattungsgemäßen Querträgers nach den kennzeichnenden Merkmalen des Patentanspruchs 1.

Die Erfindung beruht auf dem allgemeinen Gedanken, durch die konkave Formgebung der bandförmigen Abdeckung zwischen deren Auflagebereichen die Aufprallenergie zu einem möglichst großen Teil durch innerhalb der bandförmigen Abdeckung erzeugte Zugspannungen aufzunehmen. Hierdurch wird das Maß an Aufprallenergie, bei dem die bandförmige Abdeckung noch nicht plastisch verformt wird, erheblich gegenüber einer ebenen Ausbildung der bandförmigen Abdeckung, bei der bei der Aufnahme der Aufprallenergie ein erheblich höherer Anteil an Biegebeanspruchung auftritt, gesteigert.

Von besonderer Bedeutung für die Erzielung der erfindungsgemäßen Wirkung ist eine insbesondere über den gesamten zwischen den Rahmenkanten liegenden Freiraum durchgehend konkav verlaufende Form.

Ein vorteilhaftes Ausführungsbeispiel, auf das die Erfindung allerdings nicht beschränkt ist, ist in der Zeichnung dargestellt.

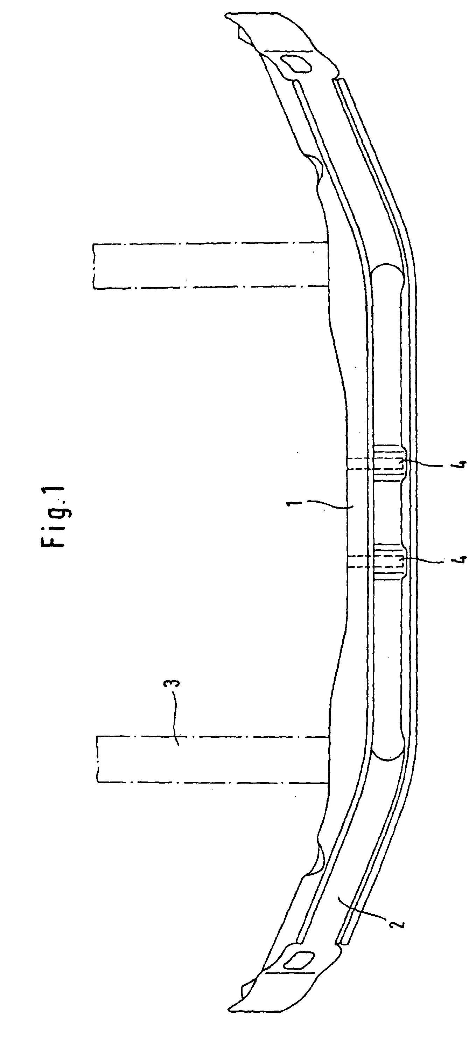

In dieser zeigt die einzige
- Fig. 1: eine perspektivische Ansicht eines mit einer bandförmigen Abdeckung abgedeckten U-Profiles eines Fahrzeugquerträgers.

Ein Fahrzeugquerträger als rahmenförmiges Tragelement im Sinne der Erfindung setzt sich zusammen aus einem U-Profil 1 mit einer die offene Profilseite abdeckenden, bandförmigen Abdeckung 2. Bei einer Ausbildung dieser beiden Teile aus Metall sind diese miteinander verschweißt.

Fest angebunden ist das U-Profil 1 an zwei Längsträger 3 des Kraftfahrzeuges.

Innerhalb des U-Profiles sind in dem Bereich zwischen den Längsträgern 2 Versteifungs-Stege 4 vorgesehen, die jeweils zwischen den U-Schenkeln des U-Profiles 1 unter senkrechtem Auftreffen auf den Boden des U-Profiles 1 verlaufen. Im übrigen erstrecken sich diese Stege bis zu den freien Enden der U-Schenkel des U-Profils 1.

An der bandförmigen Abdeckung 2 liegt ein in der Zeichnung nicht dargestellter Stoßfänger des Kraftfahrzeuges mit seinem elastisch verformbaren Materialbereich an. In dem Bereich zwischen den Längsträgern 3 ist die bandförmige Abdeckung 2 von außen gesehen konkav nach innen eingezogen, wobei sich insgesamt drei solche Bereiche ergeben, von denen zwei direkt an den Anbindungsbereichen zu den Längsträgern 3 beginnen und jeweils an einem der Stege 4 enden und von denen der dritte Bereich zwischen den Stegen 4 vorgesehen ist.

Versuche haben ergeben, dass mit der vorstehend beschriebenen Formgebung der Abdeckung 2 gegenüber einer Ausbildung mit einem ebenen Verlauf dieser Abdeckung 2 ein erheblich höherer oberer Aufprallenergiegrenzwert, bei dem die Abdeckung noch nicht plastisch verformt wird, erreicht werden kann. Dies ist ein großer Vorteil, der mit der Erfindung erzielt werden kann.

## Patentansprüche

1. Rahmenförmiges Tragelement eines Kraftfahrzeuges zur Abstützung eines, energieabsorbierendes Material enthaltenden Stoßfängers, mit einem, insbesondere an Längsträgern des Fahrzeuges angebundenen, U-Profil mit den Längskanten der U-Profilschenkel als Rahmenteilen, dessen von den Rahmenteilen umschlossener Freiraum dem Stoßfänger zugewandt ist und das über die an den angrenzenden Stoßfänger angrenzenden Rahmenkanten mit einer, dem absorptionsfähigen Material des Stoßfängers zugewandten, bandförmigen Abdeckung fest verschlossen ist, wobei die bandförmige Abdeckung zwischen den Rahmenkanten gegenüber dem angrenzenden Stoßfänger über den gesamten zwischen diesen Rahmenkanten liegenden Rahmenfreiraum konkav ausgebildet ist,
**gekennzeichnet durch die Merkmale,**
- innerhalb des U-Profiles (1) sind in dessen Längsrichtung beabstandet jeweils zwischen dessen U-Schenkeln senkrecht auf den Boden des U-Profiles (1) auftreffende Versteifungsstege (4) vorgesehen,
- die Versteifungsstege (4) bilden zusätzliche, fest mit der bandförmigen Abdeckung verbundene Rahmenkanten des rahmenförmigen Tragelementes.

## Claims

1. A frame-shaped load-bearing element of a motor vehicle for supporting a bumper which contains energy-absorbing material having a U-section which is joined to side members of the motor vehicle in particular with the longitudinal edges of the U-section sides as frame parts, the space surrounded by said frame parts facing the bumper, and which is connected solidly by the frame edges bounding the adjacent bumper to a band-shaped cover facing the absorbent material of the bumper, the band-shaped cover between the frame edges opposite the adjacent bumper being concave in design along the entire frame space which lies between the frame edges,
**characterised by** the following features
- provided within the U-section (1), spaced at intervals along it and striking the base of the U-section (1) perpendicularly between the sides of the U-section, are reinforcing webs (4),
- the reinforcing webs (4) form additional frame edges of the frame-shaped load-bearing element which are connected solidly to the band-shaped cover.

## Revendications

1. Élément porteur en forme de châssis d'un véhicule automobile pour le support d'un pare-chocs contenant un matériau absorbant l'énergie, avec un profilé en U, attaché en particulier aux longerons du véhicule, avec les arêtes longitudinales des branches du profilé en U comme parties de châssis, dont l'espace libre entouré par les parties de châssis est tourné vers le pare-chocs et qui est fermé solidement par les arêtes de châssis adjacentes au pare-chocs adjacent par un recouvrement en forme de bande tourné vers le matériau absorbant du pare-chocs, le recouvrement en forme de bande entre les arêtes de châssis étant de forme concave par rapport au pare-chocs adjacent sur tout l'espace libre de châssis se trouvant entre ces arêtes de châssis,
**caractérisé par** les caractéristiques,
- des nervures raidisseuses (4) sont prévues à l'intérieur du profilé en U (1), espacées dans la direction longitudinale de celui-ci, tombant chacune verticalement sur le fond du profilé en U (1) entre ses branches en U,
- les nervures raidisseuses (4) forment des arêtes de châssis supplémentaires de l'élément porteur en forme de châssis, attachées solidement au recouvrement en forme de bande.
